# EUROPEAN PATENT APPLICATION

(11) **EP 4 852 078 A1**
(43) Date of publication of application: **09.12.2026**
(21) Application number: 25747754.7
(22) Date of filing: 23.01.2025
(51) Int. Cl.: H01M 4/134, H01M 10/0525, H01M 10/0587, H01M 4/583

(54) **LITHIUM-ION BATTERY**

(30) Priority: 31.01.2024 CN 202410136861
(71) Applicant: Zhuhai CosMX Battery Co., Ltd., Zhuhai, Guangdong 519180 (CN)
(72) Inventor: FAN, Hongsheng, Zhuhai, Guangdong 519180 (CN); WU, Yida, Zhuhai, Guangdong 519180 (CN); DU, Dongdong, Zhuhai, Guangdong 519180 (CN); LIU, Chunyang, Zhuhai, Guangdong 519180 (CN); LI, Suli, Zhuhai, Guangdong 519180 (CN)
(74) Representative: Murgitroyd & Company
(86) International application number: PCT/CN2025/074357
(87) International publication number: WO 2025/162185

(57) **Abstract**

The present invention is a lithium-ion battery. The lithium-ion battery includes a negative electrode plate and a positive electrode plate. The positive electrode plate includes a nickel-based positive electrode active material, a negative electrode active layer of the negative electrode plate includes a negative electrode active material and nickel, and the negative electrode active material includes a silicon-carbon material and graphite. The components of the negative electrode active layer satisfy 9500 ≤ α*d/η ≤ 24500, wherein α is the content of nickel in the negative electrode active layer, η is the content percentage by mass of silicon in the negative electrode active layer, and d is the median particle size of the negative electrode active material. The negative electrode plate includes a carbon-silicon negative electrode active material, such that good cycle performance and safety performance can be taken into account while improving the energy density of the lithium-ion battery.

## Description

### TECHNICAL FIELD

The present invention relates to an electrode plate, in particular to a negative electrode plate and a lithium-ion battery, which belong to the technical field of new energy.

### BACKGROUND

Lithium-ion batteries are characterized by high energy density, long cycle life, and environmental friendliness. They have been widely used in electronic products such as mobile communication devices, laptops, and digital cameras, and are increasingly playing a vital role in electric transportation and energy storage fields.

Negative electrode materials are one of the key materials of lithium-ion batteries. Currently, the most widely used commercial negative electrode material for lithium-ion batteries is graphite; however, its theoretical specific capacity is only 372 mAh/g. Consequently, it can no longer meet the demands of lithium-ion batteries with a high energy density. Silicon-carbon negative electrode materials exhibit a theoretical specific capacity of 1500 mAh/g or more, making them a highly promising next-generation negative electrode material.

However, silicon-carbon negative electrode materials undergo significant volume expansion and contraction during each lithium intercalation and deintercalation process, leading to a rapid increase in the thickness of lithium-ion batteries during the charge-discharge cycling process. Consequently, although the volumetric energy density of the battery including a silicon-carbon negative electrode material is relatively high at the beginning, it decreases significantly as the number of cycles increases, leading to a certain level of safety risk. Therefore, for lithium-ion batteries whose negative electrode includes a silicon-carbon material, how to significantly reduce the thickness expansion rate during charge-discharge cycling is a critical challenge for advancing their commercial application.

### SUMMARY

In order to reduce the thickness expansion rate of carbon-silicon negative electrode materials during the charge-discharge cycling process and improve the safety performance and cycling stability of the battery, the present invention provides a negative electrode plate including a carbon-silicon negative electrode active material, thereby enabling improved energy density in lithium-ion batteries alongside superior cycling performance and safety performance. The resulting lithium-ion battery demonstrates excellent performance in terms of energy density, cycling performance, and safety performance.

The present invention provides a lithium-ion battery. The lithium-ion battery includes a negative electrode plate and a positive electrode plate. The positive electrode plate includes a nickel-based positive electrode active material, a negative electrode active layer of the negative electrode plate includes a negative electrode active material and nickel element, and the negative electrode active material includes a silicon-carbon material and graphite. The components of the negative electrode active layer satisfy 9500 ≤ α*d/η ≤ 24500,

where α, in ppm, is the content of the nickel element in the negative electrode active layer; η, in %, is the percentage by mass of the silicon element in the negative electrode active layer; and d, in µm, is the median particle size of the negative electrode active material.

In the negative electrode plate of the present invention, the negative electrode active material includes a silicon-carbon material, a graphite material, and nickel element. By ensuring that the contents of the silicon-carbon material, the graphite material, and the nickel element and the size of the silicon-carbon material and the graphite material satisfy certain requirements, the expansion and deformation of the negative electrode plate during the lithium intercalation/deintercalation process are effectively suppressed, thereby guaranteeing the cycling performance and safety performance of the lithium-ion battery including the negative electrode plate. Therefore, the silicon-containing negative electrode plate and the nickel-based positive electrode plate of the present invention not only improve the energy density of the lithium-ion battery, but also guarantee the cycling performance and safety performance of the lithium-ion battery. The present invention overcomes the defects of silicon-based materials and broadens the application ranges thereof.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

### DETAILED DESCRIPTION OF THE EMBODIMENTS

In order to make the objects, technical solutions and advantages of the present invention clearer, the technical solutions in the examples of the present invention will be clearly and completely described below in conjunction with the examples of the present invention. Apparently, the described examples are some, rather than all, of the examples of the present invention. Based on the examples of the present invention, all other examples obtained by those of ordinary skill in the art without creative efforts fall within the scope of protection of the present invention.

The present invention provides a lithium-ion battery. The lithium-ion battery includes a negative electrode plate and a positive electrode plate. The positive electrode plate includes a nickel-based positive electrode active material, a negative electrode active layer of the negative electrode plate includes a negative electrode active material and nickel element, and the negative electrode active material includes a silicon-carbon material and graphite. The components of the negative electrode active layer satisfy 9500 ≤ α*d/η ≤ 24500 (e.g., 9500, 10000, 11000, 12000, 13000, 14000, 15000, 16000, 17000, 18000, 19000, 20000, 21000, 22000, 23000, 24000 or 24500),

where α, in ppm, is the content of the nickel element in the negative electrode active layer; η, in %, is the percentage by mass of the silicon element in the negative electrode active layer; and d, in µm, is the median particle size D50 of the negative electrode active material. The median particle size referred to in the present invention is the particle size at which the cumulative volume reaches 50% of the total volume of all the negative electrode active materials.

It should be noted that the negative electrode plate satisfying the aforementioned relationship in the present invention refers to a negative electrode plate in a lithium-ion battery after sorting treatment, or a negative electrode plate in a lithium-ion battery that has undergone formation and discharge treatments (where the discharge treatment refers to a discharge treatment performed after a maximum of 10 cycles).

In the present invention, the negative electrode plate includes a silicon-carbon material, the positive electrode plate includes a nickel-based positive electrode active material, and thus the lithium-ion battery can exhibit an excellent energy density. Moreover, when the negative electrode active layer satisfies the aforementioned relationship, the content of the nickel element becomes more compatible with the content of the silicon element and the morphology of the negative electrode active material. Based on the requirements for the content of the silicon element and the median particle size D50 of the negative electrode active material, an appropriate amount of the nickel element meeting the requirements helps the electrolyte form a stable functional layer of suitable thickness on the surface of the negative electrode active material. On the one hand, this functional layer has a more stable structure and does not rupture due to the expansion and contraction of the silicon-carbon material. This prevents the excessive consumption of the electrolyte and lithium ions caused by continuous SEI film reconstruction and surface side reactions. Furthermore, it avoids the over-accumulation of by-products as well as the interfacial corrosion or deterioration of the silicon-carbon material. On the other hand, based on the special specific surface area corresponding to the particular median particle size of the negative electrode active material, the functional layer has a more optimal thickness. This can ensure the smooth intercalation and deintercalation of lithium ions, providing favourable conditions for the improvement of the cycling performance and safety performance. Consequently, the lithium-ion battery remains free from excessive expansion and deformation over long-term cycling. This not only ensures the smooth intercalation and deintercalation of lithium ions, but also eliminates the risk of rupture or explosion of the lithium-ion battery under external forces caused by expansion and deformation, thereby significantly improving the cycle life.

In an embodiment, 20 ppm ≤ α ≤ 75 ppm (e.g., 20 ppm, 25 ppm, 30 ppm, 35 ppm, 40 ppm, 45 ppm, 50 ppm, 55 ppm, 60 ppm, 65 ppm, 70 ppm or 75 ppm); and/or, 1.5% ≤ η ≤ 7.5% (e.g., 1.5%, 2%, 2.5%, 3%, 3.5%, 4%, 4.5%, 5%, 5.5%, 6%, 6.5%, 7% or 7.5%); and/or, 9 µm ≤ d ≤ 16 µm (e.g., 9 µm, 10 µm, 11 µm, 12 µm, 13 µm, 14 µm, 15 µm or 16 µm). When at least one of the content α of the nickel element, the percentage by mass η of the silicon element, and the median particle size d satisfies the ranges mentioned above, it is conducive to further improving the cycling performance and safety performance of the battery.

Further, when the negative electrode active layer further includes cobalt element, the content of the cobalt element in the negative electrode active layer is not higher than 50 ppm. Research has shown that an excessive amount of the cobalt element may exacerbate side reactions on the surface of the silicon-carbon material, leading to an overly thick side-reaction layer and thereby increasing the transport resistance of lithium ions. Therefore, when the negative electrode active layer includes no more than 50 ppm of the cobalt element, the lithium-ion battery exhibits better rate performance.

It can be understood that in the preparation process, the components of the negative electrode active layer satisfying the above relationship can be obtained by controlling the selection of raw materials in the slurry of the negative electrode active layer.

Of course, when the negative electrode plate is incorporated in a lithium-ion battery, the detection of relevant parameters can also be realized by performing treatments such as disassembling the lithium-ion battery.

Specifically, the disassembled negative electrode plate is soaked in DMC for 2 h, air-dried, and then soaked in deionized water to detach the negative electrode coating from the copper foil, followed by direct drying and removing the negative electrode current collector to obtain the negative electrode active layer powder. The powder is tested according to the following methods, to obtain the content α of the nickel element, the content of the cobalt element, the percentage by mass η of the silicon element, and the median particle size d of the negative electrode active material, respectively.

The powder obtained above is subjected to ICP testing to obtain the percentage by mass α of the Ni element and the percentage by mass of the Co element.

The powder obtained above is placed under an argon atmosphere and is heated at 10°C/min to 230°C, with the weight of the powder at this time as the initial weight W₁. Then, the atmosphere is switched to air, and the powder is heated at 10°C/min to 800°C and held for 8 h to obtain the final weight W₂ of the powder. The content η of the Si element in the negative electrode coating is calculated as W₂/W₁/2.14, where 2.14 is derived from the molar mass 60 of silicon dioxide divided by the molar mass 28 of the silicon element.

The powder obtained above is placed under argon atmosphere and heated at 10°C/min to 400°C and held for 2 h, followed by cooling to measure the median particle size d of the powder using a laser particle size analyser.

The negative electrode plate of the present invention includes a negative electrode current collector, and a negative electrode active layer provided on at least one surface of the negative electrode current collector, wherein the negative electrode current collector includes at least one of copper foil, nickel foam, and copper foam, and the negative electrode active layer includes a negative electrode active material and a negative electrode binder. The negative electrode active material includes a silicon-carbon material and graphite that provide intercalation and deintercalation sites for lithium ions. The negative electrode binder includes at least one of polytetrafluoroethylene, polyvinylidene fluoride, polyvinyl fluoride, polyethylene, polypropylene, polyacrylic acid, sodium polyacrylate, lithium polyacrylate, polyvinyl alcohol, carboxymethyl cellulose, sodium carboxymethyl cellulose, lithium carboxymethyl cellulose, hydroxypropyl cellulose, diacetyl cellulose, polyvinyl chloride, carboxylated polyvinyl chloride, ethylene oxide-containing polymers, polyvinylpyrrolidone, polyurethane and styrene-butadiene rubber.

The specific form of the silicon-carbon material is not defined in the present invention, which may be a composite of a silicon material (e.g., elemental silicon or silicon oxides) and a carbon material (e.g., graphite, graphene, or pyrolytic carbon), for example, a mixture of silicon and carbon materials, or a silicon material filled in the pores of a carbon material.

The specific form of graphite is also not defined in the present invention, which may be natural graphite, artificial graphite, or a coated natural graphite and/or artificial graphite. For example, the graphite may be an amorphous carbon-coated artificial graphite product, and the coating mass of amorphous carbon may be 0.1%-3% (e.g., 0.1%, 0.5%, 1%, 1.5%, 2%, 2.5% or 3%) of the product.

Further, the negative electrode active layer further includes a negative electrode conductive agent, and the negative electrode conductive agent may be, for example, selected from at least one of carbon black, acetylene black, single-walled carbon nanotubes, multi-walled carbon nanotubes, graphene, Ketjen black, and carbon fibres.

In a specific embodiment, the negative electrode plate of the present invention also has a special crystalline phase structure. Specifically, in an X-ray diffraction spectrum, the active layer of the negative electrode plate exhibits a first diffraction peak with 2θ being 53.7°-55.7°, and a second diffraction peak with 2θ being 76.4°-78.4°, and the intensity ratio φ of the first diffraction peak to the second diffraction peak is 8-16. When the negative electrode plate exhibits the intensity ratio φ above, the degree of expansion and deformation of the negative electrode plate during cycling is further reduced.

Specifically, the negative electrode plate may be subjected to X-ray diffraction detection to obtain the aforementioned parameters.

For example, the intensity ratio φ can be achieved by selecting the graphite particles that allow the negative electrode plate to have an OI value of 9-17 at a compacted density of 1.73 g/cm³. The OI value can be obtained by subjecting the negative electrode active layer of the negative electrode plate to X-ray diffraction. The height of the diffraction peak of the 004 crystal plane with 2θ being 53.7°-55.7° is detected as I₁, and the height of the diffraction peak of the 110 crystal plane with 2θ being 76.4°-78.4° is detected as I₂, respectively, and I₁/I₂ is the OI value.

Furthermore, the components of the negative electrode active layer can also be further adjusted on the basis that the conditions described above are satisfied, such that the negative electrode plate satisfies 0.25 ≤ φ*η ≤ 0.6 (e.g., 0.25, 0.3, 0.35, 0.4, 0.45, 0.5, 0.55 or 0.6), thereby further balancing the energy density and cycling performance of the silicon-containing negative electrode. Specifically, by considering both the crystalline phase structure and the content of the silicon element of the negative electrode active layer to achieve a mutual match, the negative electrode active layer is allowed to undergo an appropriate degree of expansion without significantly affecting the energy density of the lithium-ion battery and the structure of the negative electrode material. This enhances the electrolyte retention rate of the negative electrode active layer and lays a foundation for the long-term effective cycling of the lithium-ion battery, thereby enabling the lithium-ion battery to have not only an excellent energy density but also more outstanding cycling performance.

In a specific embodiment, when the negative electrode plate possesses the following thermogravimetric analysis parameters, the energy density of the lithium-ion battery is more significantly increased on the premise that the cycling performance of the lithium-ion battery is not affected.

Specifically, in the differential scanning calorimetry analysis, the negative electrode active layer satisfies the following formulas 1 and 2:
0.75% ≤ m*d ≤ 4% (e.g., 0.75%, 1%, 1.5%, 2%, 2.5%, 3%, 3.5% or 4%) formula 1, 30% ≤ (1.27n-6.32m)/η ≤ 95% (e.g., 30%, 35%, 40%, 45%, 50%, 55%, 60%, 65%, 70%, 75%, 80%, 85%, 90% or 95%) formula 2
where when the negative electrode active layer is heated from 25°C to 1000°C at 10°C/min under an argon atmosphere, m is the weight loss percentage in the range of 230-360°C, and n is the weight loss percentage in the range of 230-950°C.

In detail, when the negative electrode active layer is heated as described above, the mass thereof decreases continuously. Specifically, m is the mass loss percentage of the negative electrode active layer during heating from 230°C to 360°C relative to the mass of the negative electrode active layer at 230°C; and n is the mass loss percentage of the negative electrode active layer during heating from 230°C to 950°C relative to the mass of the negative electrode active layer at 230°C.

The weight loss described above mainly originates from the binder in the negative electrode active layer, and different binder constitutes decompose as the temperature gradually increases, resulting in weight loss. The binder molecules that decompose at 230-360°C generally contain abundant molecular structures such as hydroxyl, carboxyl, and ether groups. These oxygen-containing groups exhibit good interactions with elements like carbon and silicon in the negative electrode active material, allowing the binders to effectively coat the surface of the negative electrode active material and provide a superior dispersing effect. The binder molecules that begin to decompose at 360-950°C are primarily composed of carbon and hydrogen elements. These molecular chains featuring a carbon-chain backbone possess excellent elasticity, which can bond the negative electrode active material to the current collector or achieve the bonding between the negative electrode materials, thereby better suppressing the continuous expansion of the negative electrode coating. Therefore, when the content of the binder satisfies formula 1 and formula 2 in relation to the median particle size of the negative electrode active material and the content of the silicon element, respectively, the binder provides superior dispersion and bonding for the negative electrode active material, and the resulting binder network is more compatible with the physical morphology and chemical components of the current negative electrode active material. This binder network can, on the one hand, suppress the expansion of the silicon material during cycling, thereby allowing the high specific capacity of the silicon material to be utilized effectively over the long term; and on the other hand, the binder network can provide effective bonding for the negative electrode active material to ensure that the negative electrode active material does not detach from the current collector, without affecting the smooth transport of lithium ions and electrons.

Further, when 0.05% ≤ m ≤ 0.35% (e.g., 0.05%, 0.1%, 0.15%, 0.2%, 0.25%, 0.3% or 0.35%) and 1.5% ≤ n ≤ 3.5% (e.g., 1.5%, 2%, 2.5%, 3% or 3.5%), the cycle life of the lithium-ion battery is even better.

Furthermore, further screening of the negative electrode active materials also has a positive effect on the energy density, cycling performance, and safety performance of lithium-ion batteries to some extent.

In a specific embodiment, the median particle size Dv50 of the silicon-carbon material is 6 µm-12 µm (e.g., 6 µm, 7 µm, 8 µm, 9 µm, 10 µm, 11 µm or 12 µm). Silicon-carbon materials with such a median particle size exhibit more controllable expansion and deformation and also possess optimized lithium intercalation kinetics that not only prevent the dendrite precipitation caused by hindered lithium-ion transport, but also reduce the likelihood of side reactions between the silicon-carbon material and the electrolyte.

In another specific embodiment, the percentage by mass of the silicon element in the silicon-carbon material is 40%-60% (e.g., 40%, 43%, 45%, 48%, 50%, 53%, 55%, 58% or 60%), which is conducive to increasing the energy density of the battery.

In another specific embodiment, the median particle size Dv50 of the graphite is 8 µm-20 µm (e.g.,8 µm, 10 µm, 13 µm, 15 µm, 18 µm or 20 µm). The graphite with such a median particle size possesses optimized lithium intercalation kinetics that not only prevent the dendrite precipitation caused by hindered lithium-ion transport, but also reduce the likelihood of side reactions between the silicon-carbon material and the electrolyte.

Further, the negative electrode plate has an areal density of 8 mg/cm²-15 mg/cm²(e.g., 8 mg/cm², 9 mg/cm², 10 mg/cm², 11 mg/cm², 12 mg/cm², 13 mg/cm², 14 mg/cm² or 15 mg/cm²); and/or the negative electrode plate has a compacted density of 1.2 g/cm³-1.8 g/cm³ (e.g., 1.2 g/cm³, 1.3 g/cm³, 1.4 g/cm³, 1.5 g/cm³, 1.6 g/cm³, 1.7 g/cm³ or 1.8 g/cm³). It should be noted that the negative electrode plate having the areal density and compacted density mentioned above is a negative electrode plate in a lithium-ion battery that has undergone a formation treatment but has not yet been discharged (not reached 0% SOC), or a negative electrode plate in a lithium-ion battery that has undergone formation and discharge treatments (where the discharge treatment refers to a discharge treatment performed after a maximum of 10 cycles). The negative electrode plate with such an areal density and/or compacted density is conducive to keeping a balance between the energy density and electronic transport resistance, thereby exhibiting excellent electrical properties.

In a specific embodiment, the median particle size Dv50 of the silicon-carbon material is 6 µm-12 µm; and/or
the percentage by mass of the silicon element in the silicon-carbon material is 40%-60%; and/or
the graphite has a median particle size Dv50 of 10 µm-20 µm; and/or
the negative electrode plate has an areal density of 8 mg/cm²-15 mg/cm²; and/or
the negative electrode plate has a compacted density of 1.2 g/cm³-1.8 g/cm³.

It should be noted that the negative electrode plate meeting any of the parameters defined above refers to a negative electrode plate in a lithium-ion battery after sorting treatment, or a negative electrode plate in a lithium-ion battery that has undergone formation and discharge treatments (where the discharge treatment refers to a discharge treatment performed after a maximum of 10 cycles).

The lithium-ion battery of the present invention not only can leverage the advantages of the silicon-containing negative electrode to achieve an excellent energy density, but also can effectively overcome the expansion and deformation tendencies of silicon-based materials, while simultaneously ensuring favourable cycling performance and safety performance.

The positive electrode plate specifically includes a positive electrode current collector, and a positive electrode active layer including a positive electrode active material provided on one or both surfaces of the positive electrode current collector.

Specifically, when preparing the positive electrode plate, for example, a positive electrode active material, a positive electrode conductive agent, and a positive electrode binder may be dispersed in an appropriate amount of an N-methylpyrrolidone (NMP) solvent, and mixed with thorough stirring to form a homogeneous positive electrode slurry; and the positive electrode slurry is uniformly coated onto a positive electrode current collector, followed by drying, rolling and slitting to obtain the positive electrode plate.

In a specific embodiment, the positive electrode active layer includes, in percentages by mass, 70 wt%-99 wt% (e.g., 70 wt%, 75 wt%, 80 wt%, 85 wt%, 90 wt%, 95 wt% or 99 wt%) of a positive electrode active material, 0.5 wt%-15 wt% (e.g., 0.5 wt%, 1 wt%, 3 wt%, 5 wt%, 8 wt%, 10 wt%, 13 wt% or 15 wt%) of a positive electrode conductive agent, and 0.5 wt%-15 wt% (e.g., 0.5 wt%, 1 wt%, 3 wt%, 5 wt%, 8 wt%, 10 wt%, 13 wt% or 15 wt%) of a positive electrode binder; and further, the positive electrode active layer includes 80 wt%-98 wt% of a positive electrode active material, 1 wt%-10 wt% of a positive electrode conductive agent, and 1 wt%-10 wt% of a positive electrode binder. The material of the positive electrode current collector may be at least one of aluminium foil, and nickel foil; the positive electrode conductive agent may be selected from at least one of carbon black, acetylene black, graphene, single-walled carbon nanotubes, multi-walled carbon nanotubes, Ketjen black, and carbon fibres; and the positive electrode binder may be selected from at least one of polytetrafluoroethylene, polyvinylidene fluoride, polyvinyl fluoride, polyethylene, polypropylene, polyvinyl alcohol, carboxymethyl cellulose, hydroxypropyl cellulose, diacetyl cellulose, polyvinyl chloride, carboxylated polyvinyl chloride, ethylene oxide-containing polymers, polyvinylpyrrolidone, and polyurethane.

The selection of the positive electrode active material is not limited in the present invention, which may be, for example, at least one composite oxide of lithium and a metal selected from cobalt, manganese, nickel, other elements, and combinations thereof. In detail, the positive electrode active material may be at least one of a lithium cobalt oxide, a nickel-based positive electrode active material, lithium iron phosphate, lithium manganese iron phosphate, a lithium manganese oxide, a lithium-rich manganese-based material, etc.

In a specific embodiment, the positive electrode active material includes a nickel-based positive electrode active material.

In a specific embodiment, based on the energy density requirements, the positive electrode active material in the positive electrode plate is a nickel-based positive electrode active material. By way of example, the nickel-based positive electrode active material may be a lithium nickel oxide, a lithium nickel manganese oxide, and a LiₓNi_{y1}Co_{y2}M1_{y3}M2_{y4}O₂ ternary material (0.99 ≤ x ≤ 1.05, 0.99 < y1+y2+y3 ≤ 1.05, 1/3 ≤ y1 ≤ 0.8, 0 ≤ y4 ≤ 0.1, M1 is selected from Mn or Al, and M2 is at least one doping element of Mg, Ti, Mn, Al, Te, W, Ni, Nb, Zr, La, F, Ce, Sr, Y, K, B and P elements and is different from M1).

It should be noted that in addition to controlling the selection of the raw materials in the slurry of the negative electrode active layer as described above, the negative electrode plate of the present invention can also be prepared in-situ within the lithium-ion battery when the positive electrode active material is a nickel-based positive electrode active material.

Specifically, after assembling a negative electrode plate (a negative electrode plate precursor) not including the nickel element and/or cobalt element with a positive electrode plate or the like to obtain a bare cell, by controlling the formation and pre-cycling after formation, the nickel element and/or cobalt element in the nickel-based positive electrode active material in the positive electrode plate undergo dissolution and enter the negative electrode active layer of the negative electrode plate precursor, thus achieving the preparation of the negative electrode plate according to the first aspect.

For the positive electrode plate, when the positive electrode plate has an areal density of 16.7 mg/cm²-26.2 mg/cm² (e.g., 16.7 mg/cm³, 17 mg/cm³, 18 mg/cm³, 19 mg/cm³, 20 mg/cm³, 21 mg/cm³, 22 mg/cm³, 23 mg/cm³, 24 mg/cm³, 25 mg/cm³ or 26.2 mg/cm³), and/or the positive electrode plate has a compacted density of 3.1 g/cm³-4.2 g/cm³ (e.g., 3.1 g/cm³, 3.3 g/cm³, 3.5 g/cm³, 3.8 g/cm³, 4 g/cm³ or 4.2 g/cm³), the cycling performance of the lithium-ion battery will be even more significantly improved. Similarly, the positive electrode plate is a positive electrode plate in a lithium-ion battery that has undergone a formation treatment but has not yet been discharged (not reached 0% SOC), or a positive electrode plate in a lithium-ion battery that has undergone formation and discharge treatments (where the discharge treatment refers to a discharge treatment performed after a maximum of 10 cycles).

Further, based on the requirements for the safety performance and cycling performance of the lithium-ion battery, the present invention defines the gravimetric capacity relationship between the positive electrode plate and the negative electrode plate in the lithium-ion battery, and the ratio of the gravimetric capacity per unit area of the negative electrode plate to that of the positive electrode plate is 0.97-1.1 (e.g., 0.97, 0.98, 0.99, 1, 1.01, 1.02, 1.03, 1.04, 1.05, 1.06, 1.07, 1.08, 1.09 or 1.1), further, 0.99-1.05.

A method for determining the gravimetric capacity per unit area of the negative electrode plate above includes: the negative electrode plate is assembled into a 2403 button cell (the cell has a diameter of 24 mm and a thickness of 3 mm, where the negative electrode plate has a diameter of 16 mm, the separator has a diameter of 22 mm, and the counter electrode is a lithium foil with a diameter of 20 mm); the negative electrode plate is subjected to lithium intercalation at a current of 0.05C until the potential reaches 5 mV (vs. Li/Li⁺), and then left to stand for 10 min; the negative electrode plate is subjected to lithium intercalation again at a current of 0.02C until the potential reaches 5 mV, and then left to stand for 10 min; and the negative electrode plate is subjected to lithium deintercalation at a current of 0.05C until the potential reaches 0.9 V (vs. Li/Li⁺). After 3 cycles as per the aforementioned procedure, the gravimetric capacity per unit area A (mAh/cm²) of the negative electrode plate is calculated by dividing the third delithiation capacity by the surface area of the negative electrode plate.

A method for determining the gravimetric capacity of the positive electrode plate above includes: the positive electrode plate is assembled into a 2403 button cell (the cell has a diameter of 24 mm and a thickness of 3 mm, where the positive electrode plate has a diameter of 16 mm, the separator has a diameter of 22 mm, and the counter electrode is a lithium foil with a diameter of 20 mm); the positive electrode plate is subjected to lithium deintercalation at a current of 0.05C until the potential is 50 mV higher than the rated maximum voltage of the lithium-ion battery (vs. Li/Li⁺), and then left to stand for 10 min; the positive electrode plate is subjected to lithium deintercalation again at a current of 0.02C until the potential is 50 mV higher than the rated maximum voltage of the lithium-ion battery, and then left to stand for 10 min; and the positive electrode plate is subjected to lithium intercalation at a current of 0.05C until the potential reaches 3.3 V (vs. Li/Li⁺). After 3 cycles as per the aforementioned procedure, the gravimetric capacity per unit area B (mAh/cm²) of the positive electrode plate is calculated by dividing the third lithiation capacity by the surface area of the positive electrode plate.

In the button cell used for determining the gravimetric capacities of the positive and negative electrode plates, the components of the electrolyte include: an organic solvent, a lithium salt and an additive, where the organic solvent includes EC, PC, and EMC, with a mass ratio of 1 : 1 : 1; the lithium salt is LiPF₆ with a concentration of 1 mol/L; and the additive includes FEC and PS, with the percentages by mass thereof being 7% and 3%, respectively. The negative electrode plate has an areal density of 9.1 mg/cm² and a compacted density of 1.73 g/cm³, and the positive electrode plate has an areal density of 19 mg/cm² and a compacted density of 3.4 g/cm³.

In the present invention, A/B is controlled in the range of 0.97-1.1, further, 0.99-1.05. Research has shown that once the ratio of the gravimetric capacity per unit area above is met, on the one hand, it ensures the effective intercalation of lithium ions into the negative electrode plate during the charging process and prevents the precipitation of lithium dendrites caused by uneven lithium intercalation and de-intercalation sites of the positive and negative electrodes, thereby not only eliminating the risk of short circuits caused by dendrites puncturing the separator but also maintaining the quantity of (de)intercalatable lithium inside the battery; on the other hand, it avoids the dissolution of transition metal ions from the positive electrode active material caused by lithium-ion depletion in the positive electrode plate, maintains the structural stability of the positive electrode active material and facilitates a higher charging voltage, thereby significantly improving the safety performance, cycling performance, and energy density of the lithium-ion battery.

By way of example, in an embodiment, the gravimetric capacity per unit area of the negative electrode plate is 3.5 mAh/cm²-5.73 mAh/cm² (e.g., 3.5 mAh/cm², 4 mAh/cm², 4.5 mAh/cm², 5 mAh/cm², 5.5 mAh/cm² or 5.73 mAh/cm²), and the gravimetric capacity per unit area of the positive electrode plate is 3.43 mAh/cm²-5.61 mAh/cm² (e.g., 3.43 mAh/cm², 3.5 mAh/cm², 4 mAh/cm², 4.5 mAh/cm², 5 mAh/cm², 5.5 mAh/cm² or 5.61 mAh/cm²).

In addition to the negative and positive electrode plates, the lithium-ion battery of the present invention further includes an electrolyte. Generally, the electrolyte includes an organic solvent, a lithium salt, and an additive.

When the additive includes a fluoroethylene carbonate, the fluoroethylene carbonate can facilitate the formation of a stable interface film on the surface of the silicon-carbon material, thereby inhibiting continuous side reactions. However, the fluoroethylene carbonate exhibits poor high-temperature performance in the battery and is prone to inducing gas generation, which poses potential safety hazards.

Therefore, in the present invention, in order to better utilize the fluoroethylene carbonate to facilitate the improvement of the cycling performance and safety performance of the lithium-ion battery, 0.3 ≤ γ/η ≤ 3.6 (e.g., 0.3, 0.5, 0.8, 1, 1.3, 1.5, 1.8, 2, 2.3, 2.5, 2.8, 3, 3.3, 3.5 or 3.6) is controlled, where γ is the percentage by mass of the fluoroethylene carbonate in the electrolyte, which can be obtained by extracting the electrolyte from the battery and analysing same via gas chromatography.

It should be noted that the lithium-ion battery satisfying all the relevant parameters mentioned above is a lithium-ion battery that has undergone a formation treatment but has not yet been discharged (not reached 0% SOC), or a lithium-ion battery that has undergone formation and discharge treatments (where the discharge treatment refers to a discharge treatment performed after a maximum of 10 cycles).

When preparing the lithium-ion battery, the positive electrode plate, a separator, and the negative electrode plate are wound or stacked to form a bare cell, and the bare cell is then packaged into an aluminium-plastic film pouch that has been pre-formed by stamping. The packaged battery is dried at 85°C to remove moisture, the electrolyte is injected into the dried battery, and the battery is subjected to leaving to stand, formation, secondary sealing, and sorting treatments to complete the preparation of the lithium-ion battery. The material selection for the separator is not strictly limited in the present invention. The separator may be any separator material commonly used in current lithium-ion batteries, such as one of a polypropylene (PP)separator, a polyethylene (PE) separator, a polypropylene/polyethylene (PP/PE) bilayer composite film, a polyimide (PI) electrospun separator, a polypropylene/polyethylene/polypropylene (PP/PE/PP) trilayer composite film, a cellulose non-woven separator, and a separator with a ceramic coating.

The negative electrode plate and the lithium-ion battery of the present invention are described in detail below through specific examples.

### Example 1

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.76%, 89.84%, 0.5%, 0.05%, 1.2%, and 1.65%, respectively, were mixed with deionized water to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size D50 of 13.3 µm, had a secondary particle structure, and the surface thereof was coated with 1% amorphous carbon. The negative electrode plate including the artificial graphite as the active material had an OI value of 12.9 at a compacted density of 1.73 g/cm³. Specifically, the negative electrode plate included a negative electrode active layer and a negative electrode current collector, where the negative electrode active layer included the silicon-carbon particles to be selected and graphite, carbon black, single-walled carbon nanotubes, sodium carboxymethyl cellulose, and styrene-butadiene rubber, with the proportions thereof being 96.6%, 0.5%, 0.05%, 1.2%, and 1.65%, respectively; the negative electrode current collector was a 6 µm copper foil; and the areal density was 8-15 mg/cm² (the areal density was 8-10 mg/cm² in specific examples), and the compacted density was 1.73 g/cm³.

The slurry above was coated on the surfaces of both sides (the two surfaces with the largest area) of a copper foil current collector with a thickness of 6 µm, followed by drying, rolling, and slitting to obtain a negative electrode plate precursor with an areal density of 9.1 mg/cm² and a compacted density of 1.73 g/cm³.

### 2. Preparation of positive electrode plate

An NCM811 material (LiNi_{0.8}Co_{0.1}Mn_{0.1}O₂), carbon black, and polyvinylidene fluoride, in percentages by mass of 96.5%, 1.5%, and 2%, respectively, were mixed with NMP to obtain a slurry.

The slurry was coated on the surfaces of both sides (the two surfaces with the largest area) of an aluminium foil current collector with a thickness of 10 µm, followed by drying, rolling, and slitting to obtain a positive electrode plate with an areal density of 19 mg/cm² and a compacted density of 3.4 g/cm³.

### 3. Assembly

The positive electrode plate, a separator, and the negative electrode plate were wound to form a bare cell, and the bare cell was then packaged into an aluminium-plastic film pouch that had been pre-formed by stamping. The packaged battery was dried at 85°C to remove moisture, the electrolyte was injected into the dried battery, and the battery was subjected to leaving to stand, formation, pre-cycling, secondary sealing, and sorting to obtain a lithium-ion battery, which had a voltage of 3.69 V, an initial thickness D₀ of 3.79 mm, and a capacity of 3959 mAh.

The components of the electrolyte included: an organic solvent, a lithium salt and an additive, where the organic solvent included EC, PC, and EMC, with a mass ratio of 1 : 1 : 1; the lithium salt was LiPF₆ with a concentration of 1 mol/L; and the additive included FEC, and PS (with the content thereof in percentage by mass being 3%).

The separator included a polyethylene layer, a boehmite layer coated on one side of the polyethylene layer, and polyvinylidene fluoride layers coated on the outer sides of both the polyethylene layer and the boehmite layer. The polyethylene layer had a thickness of 5 µm and was provided close to the negative electrode plate; the boehmite layer had a thickness of 2 µm and was provided close to the positive electrode plate; and the polyvinylidene fluoride layer had a thickness of 1 µm.

Formation procedure: the battery was charged at 0.05C to 3.7 V, left to stand for 10 min, charged at 0.1C to 3.9 V, left to stand for 10 min, charged at 0.33C to 4.2 V, and then charged at the constant voltage until the current was less than 0.05C.

Pre-cycling procedure: the battery was charged at 0.3C to 4.3 V, then charged at the constant voltage until the current was less than 0.2C, left to stand for 10 min, discharged at 0.2C to 2.65 V, left to stand for 10 min, and then charged at 0.5C to 4 V.

Sorting procedure: the battery was discharged at 0.2C to 2.65 V, left to stand for 10 min, charged at 0.5C to 4.25 V, charged at the constant voltage until the current was less than 0.05C, left to stand for 10 min, discharged at 0.2C to 2.65 V, left to stand for 10 min, charged at 0.5C to 3.69 V, and charged at the constant voltage until the current was less than 20 mA.

### 4. Related tests

The lithium-ion battery above was disassembled, and the resulting positive electrode plate was tested for its areal density SD1 (in g/cm²), compacted density CD1 (in g/cm³), and gravimetric capacity per unit area B1 (in mAh/cm²); and the resulting negative electrode plate was tested for its areal density SD2 (in g/cm²), compacted density CD2 (in g/cm³), gravimetric capacity per unit area B2 (in mAh/cm²), the intensity ratio φ of the first diffraction peak to the second diffraction peak, the weight loss percentage m in the range of 230-360°C, and the weight loss percentage n in the range of 230-950°C. After testing, the negative electrode plate was soaked in DMC for 2 h, air-dried, and then soaked in deionized water to detach the negative electrode coating from the copper foil, followed by drying and removing the negative electrode current collector to obtain the negative electrode active layer powder.

The nickel element content α (in ppm), cobalt element content β, silicon element content η, and median particle size d (in µm) of the negative electrode active layer powder were determined.

The test method for the areal densities SD1 and SD2 was as follows: the battery was dissembled; then the resulting double-sided coated electrode plate was air-dried, cut into a fixed area and then weighed, followed by calculation to obtain the weight per unit area of the electrode plate; additionally, the coatings were removed from the electrode plate, and the retained current collector was cut into a fixed area and then weighed, followed by calculation to obtain the weight per unit area of the current collector. The areal density of the coating was calculated by subtracting the weight per unit area of the current collector from the weight per unit area of the electrode plate and then dividing the result by 2. Alternatively, the battery was dissembled; and the resulting single-sided coated electrode plate was air-dried, cut into a fixed area and then weighed, followed by calculation to obtain the weight per unit area of the electrode plate. The areal density of the coating was calculated by subtracting the weight per unit area of the current collector from the weight per unit area of the electrode plate.

The test method for the compacted densities CD1 and CD2 was as follows: the battery was dissembled to obtain a double-sided coated electrode plate; the thickness of the electrode plate was measured using a ten-thousandth micrometre; the coatings were removed to obtain a current collector, and the thickness of the current collector was measured using a ten-thousandth micrometre; and the thickness of the coating was obtained by subtracting the thickness of the current collector from the thickness of the electrode plate and then dividing the result by 2. Alternatively, the battery was dissembled to obtain a single-sided coated electrode plate; the thickness of the electrode plate was measured using a ten-thousandth micrometre; and the thickness of the coating was obtained by subtracting the thickness of the current collector from the thickness of the electrode plate. The compacted density of the coating was obtained by dividing the areal density of the coating by the thickness of the coating.

The test method for the gravimetric capacities A and B was as follows: the battery was disassembled to obtain an electrode plate including an active layer; the electrode plate was soaked in DMC for 2 h and then dried; the active layer on one side was wiped off using a damp cloth moistened with deionized water; and a button cell was prepared according to the aforementioned method for capacity testing. In the lithium-ion battery, the positive electrode plate had a gravimetric capacity per unit area B of 3.91 mAh/cm², and the negative electrode plate had a gravimetric capacity per unit area A of 3.98 mAh/cm².

The intensity ratio φ was determined using an X-ray diffraction instrument.

m and n were determined using a thermogravimetric analyser. Under an argon atmosphere, the temperature was increased from room temperature to 1000°C at a heating rate of 10°C/min. The powder mass at 230°C, 360°C, and 950°C was recorded respectively to calculate m and n.

The nickel element content α and the cobalt element content β were determined using an ICP detector.

The percentage by mass η of the Si element was determined using a thermogravimetric analyser. The powder was placed under an argon atmosphere and was heated at 10°C/min to 230°C, with the weight of the powder at this time as the initial weight W₁. Then, the atmosphere was switched to air, and the powder was heated at 10°C/min to 800°C and held for 8 h to obtain the final weight W₂ of the powder. The content η of the Si element was calculated as W₂/W₁/2.14.

The median particle size d was measured using a laser particle size analyser. The powder was placed under an argon atmosphere and heated at 10°C/min to 400°C and held for 2 h, followed by cooling for analysis.

The electrolyte in the disassembled battery was extracted and analysed by gas chromatography to determine the percentage by mass γ of fluoroethylene carbonate in the electrolyte.

α*d/η = 45 * 13.01/3.38% = 17321, φ*η = 12.1 * 3.38% = 0.41, m*d = 0.18% * 13.01 = 2.34%, and (1.27n-6.32m)/η = (1.27*2.2 - 6.32*0.18)/3.38% = 49.0%.

The results are shown in Table 1.

### Example 2

The preparation of the lithium-ion battery in this example included the following steps:

### 1. Preparation of negative electrode plate precursor

Same as in Example 1.

### 2. Preparation of positive electrode plate

Same as in Example 1.

### 3. Assembly

The positive electrode plate, a separator, and the negative electrode plate were wound to form a bare cell, and the bare cell was then packaged into an aluminium-plastic film pouch that had been pre-formed by stamping. The packaged battery was dried at 85°C to remove moisture, the electrolyte was injected into the dried battery, and the battery was subjected to leaving to stand, formation, pre-cycling, secondary sealing, and sorting to obtain a lithium-ion battery, which had a voltage of 3.69 V, an initial thickness D₀ of 3.80 mm, and a capacity of 3957 mAh.

In the lithium-ion battery, the positive electrode plate has a gravimetric capacity per unit area of 3.91 mAh/cm², and the negative electrode plate has a gravimetric capacity per unit area of 3.98 mAh/cm².

Formation procedure: the battery was charged at 0.05C to 3.7 V, left to stand for 10 min, charged at 0.1C to 3.9 V, left to stand for 10 min, charged at 0.33C to 4.2 V, and then charged at the constant voltage until the current was less than 0.05C.

Pre-cycling procedure: the battery was charged at 0.3C to 4.35 V, then charged at the constant voltage until the current was less than 0.2C, left to stand for 10 min, discharged at 0.2C to 2.65 V, left to stand for 10 min, and then charged at 0.5C to 4 V.

Sorting procedure: the battery was discharged at 0.2C to 2.65 V, left to stand for 10 min, charged at 0.5C to 4.25 V, charged at the constant voltage until the current was less than 0.05C, left to stand for 10 min, discharged at 0.2C to 2.65 V, left to stand for 10 min, charged at 0.5C to 3.69 V, and charged at the constant voltage until the current was less than 20 mA.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 3

The preparation of the lithium-ion battery in this example included the following steps:

### 1. Preparation of negative electrode plate precursor

Same as in Example 1.

### 2. Preparation of positive electrode plate

Same as in Example 1.

### 3. Assembly

The positive electrode plate, a separator, and the negative electrode plate were wound to form a bare cell, and the bare cell was then packaged into an aluminium-plastic film pouch that had been pre-formed by stamping. The packaged battery was dried at 85°C to remove moisture, the electrolyte was injected into the dried battery, and the battery was subjected to leaving to stand, formation, pre-cycling, secondary sealing, and sorting to obtain a lithium-ion battery, which had a voltage of 3.69 V, an initial thickness D₀ of 3.80 mm, and a capacity of 3958 mAh.

Formation procedure: the battery was charged at 0.05C to 3.7 V, left to stand for 10 min, charged at 0.1C to 3.9 V, left to stand for 10 min, charged at 0.33C to 4.2 V, and then charged at the constant voltage until the current was less than 0.05C.

Pre-cycling procedure: the battery was charged at 0.3C to 4.25 V, then charged at the constant voltage until the current was less than 0.2C, left to stand for 10 min, discharged at 0.2C to 2.65 V, left to stand for 10 min, and then charged at 0.5C to 4 V.

Sorting procedure: the battery was discharged at 0.2C to 2.65 V, left to stand for 10 min, charged at 0.5C to 4.25 V, charged at the constant voltage until the current was less than 0.05C, left to stand for 10 min, discharged at 0.2C to 2.65 V, left to stand for 10 min, charged at 0.5C to 3.69 V, and charged at the constant voltage until the current was less than 20 mA.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 4

The preparation of the lithium-ion battery in this example included the following steps:

### 1. Preparation of negative electrode plate

Silicon-carbon particles, artificial graphite, carbon black, single-walled carbon nanotubes, sodium carboxymethyl cellulose, styrene-butadiene rubber, and nickel chloride, in percentages by mass of 6.76%, 89.83%, 0.5%, 0.05%, 1.2%, 1.65% and 0.01%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 12.9 at a compacted density of 1.73 g/cm³.

The slurry above was coated onto the surface of a copper foil current collector with a thickness of 6 µm, followed by drying, rolling, and slitting to obtain a negative electrode plate with an areal density of 9.1 mg/cm² and a compacted density of 1.73 g/cm³.

### 2. Preparation of positive electrode plate

A lithium cobalt oxide, carbon black, and polyvinylidene fluoride, in percentages by mass of 96.5%, 1.5%, and 2%, respectively, were mixed with NMP to obtain a slurry.

The slurry above was coated onto the surface of an aluminium foil current collector with a thickness of 10 µm, followed by drying, rolling, and slitting to obtain a positive electrode plate with an areal density of 21.8 mg/cm² and a compacted density of 4.15 g/cm³.

### 3. Assembly

The positive electrode plate, a separator, and the negative electrode plate were wound to form a bare cell, and the bare cell was then packaged into an aluminium-plastic film pouch that had been pre-formed by stamping. The packaged battery was dried at 85°C to remove moisture, the electrolyte was injected into the dried battery, and the battery was subjected to leaving to stand, formation, pre-cycling, secondary sealing, and sorting to obtain a lithium-ion battery, which had a voltage of 3.83 V, an initial thickness D₀ of 3.75 mm, and a capacity of 3807 mAh.

Formation procedure: the battery was charged at 0.05C to 3.7 V, left to stand for 10 min, charged at 0.1C to 3.9 V, left to stand for 10 min, charged at 0.33C to 4.3 V, and then charged at the constant voltage until the current was less than 0.05C.

Pre-cycling procedure: the battery was charged at 0.3C to 4.45 V, then charged at the constant voltage until the current was less than 0.2C, left to stand for 10 min, discharged at 0.2C to 3 V, left to stand for 10 min, and then charged at 0.5C to 4.2 V.

Sorting procedure: the battery was discharged at 0.2C to 3 V, left to stand for 10 min, charged at 0.5C to 4.45 V, charged at the constant voltage until the current was less than 0.05C, left to stand for 10 min, discharged at 0.2C to 3 V, left to stand for 10 min, charged at 0.5C to 3.83 V, and charged at the constant voltage until the current was less than 20 mA.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 5

The preparation of the lithium-ion battery in this example included the following steps:

### 1. Preparation of negative electrode plate precursor

Same as in Example 1.

### 2. Preparation of positive electrode plate

The procedure was essentially identical to that of Example 1, except that the NCM811 material was replaced with an equivalent amount of a Ni90 material (LiNi_{0.9}Co_{0.05}Mn_{0.05}O₂), and the areal density of the positive electrode coating was 18.6 mg/cm².

### 3. Assembly

The positive electrode plate, a separator, and the negative electrode plate were wound to form a bare cell, and the bare cell was then packaged into an aluminium-plastic film pouch that had been pre-formed by stamping. The packaged battery was dried at 85°C to remove moisture, the electrolyte was injected into the dried battery, and the battery was subjected to leaving to stand, formation, pre-cycling, secondary sealing, and sorting to obtain a lithium-ion battery, which had a voltage of 3.67 V, an initial thickness D₀ of 3.75 mm, and a capacity of 3932 mAh.

In the lithium-ion battery, the positive electrode plate has a gravimetric capacity per unit area of 3.91 mAh/cm², and the negative electrode plate has a gravimetric capacity per unit area of 3.98 mAh/cm².

Formation procedure: the battery was charged at 0.05C to 3.7 V, left to stand for 10 min, charged at 0.1C to 3.9 V, left to stand for 10 min, charged at 0.33C to 4.15 V, and then charged at the constant voltage until the current was less than 0.05C.

Pre-cycling procedure: the battery was charged at 0.3C to 4.2 V, then charged at the constant voltage until the current was less than 0.2C, left to stand for 10 min, discharged at 0.2C to 2.6 V, left to stand for 10 min, and then charged at 0.5C to 4 V.

Sorting procedure: the battery was discharged at 0.2C to 2.6 V, left to stand for 10 min, charged at 0.5C to 4.2 V, charged at the constant voltage until the current was less than 0.05C, left to stand for 10 min, discharged at 0.2C to 2.6 V, left to stand for 10 min, charged at 0.5C to 3.67 V, and charged at the constant voltage until the current was less than 20 mA.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 6

The preparation of the lithium-ion battery in this example included the following steps:

### 1. Preparation of negative electrode plate precursor

The procedure was essentially identical to that of Example 1, except that the slurry included silicon-carbon particles, artificial graphite, carbon black, single-walled carbon nanotubes, sodium carboxymethyl cellulose, styrene-butadiene rubber, and cobalt chloride hexahydrate, in percentages by mass of 6.76%, 89.83%, 0.5%, 0.05%, 1.2%, 1.65% and 0.01%, respectively.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.81 mm, and a capacity of 3960 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 7

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.76%, 89.84%, 0.5%, 0.05%, 1.2%, and 1.65%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 8.4 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.1 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D0 of 3.78 mm, and a capacity of 3941 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 8

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.76%, 89.84%, 0.5%, 0.05%, 1.2%, and 1.65%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 18.1 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.1 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.81 mm, and a capacity of 3957 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 9

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.76%, 89.84%, 0.5%, 0.05%, 1.2%, and 1.65%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 6.8 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.1 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.76 mm, and a capacity of 3920 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 10

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.76%, 89.84%, 0.5%, 0.05%, 1.2%, and 1.65%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 20.5 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.1 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.82 mm, and a capacity of 3958 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 11

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.7%, 89.0%, 0.5%, 0.05%, 2.1%, and 1.65%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 12.9 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.18 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.80 mm, and a capacity of 3939 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

Example 12

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.8%, 90.65%, 0.5%, 0.05%, 0.35%, and 1.65%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 12.9 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.02 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.80 mm, and a capacity of 3955 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 13

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.65%, 88.4%, 0.5%, 0.05%, 1.2%, and 3.2%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 12.9 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.25 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.81 mm, and a capacity of 3962 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 14

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.81%, 90.44%, 0.5%, 0.05%, 1.2%, and 1%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 12.9 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.04 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.82 mm, and a capacity of 3957 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 15

This example differed from Example 1 in that the components of the electrolyte included: an organic solvent, a lithium salt and an additive, where the organic solvent included EC, PC, and EMC, with a mass ratio of 1 : 1 : 1; the lithium salt was LiPF₆ with a concentration of 1 mol/L; the additive included FEC, and PS (with the content thereof in percentage by mass being 3%); and after sorting, the lithium-ion battery had a voltage of 3.67 V, an initial thickness D₀ of 3.79 mm, and a capacity of 3943 mAh.

In the lithium-ion battery, the positive electrode plate had a gravimetric capacity per unit area B of 3.91 mAh/cm², and the negative electrode plate had a gravimetric capacity per unit area A of 3.98 mAh/cm².

### Example 16

This example differed from Example 1 only in that the components of the electrolyte included: an organic solvent, a lithium salt and an additive, where the organic solvent included EC, PC, and EMC, with a mass ratio of 1 : 1 : 1; the lithium salt was LiPF₆ with a concentration of 1 mol/L; the additive included FEC, and PS (with the content thereof in percentage by mass being 3%); and after sorting, the lithium-ion battery had a voltage of 3.67 V, an initial thickness D₀ of 3.79 mm, and a capacity of 3952 mAh.

In the lithium-ion battery, the positive electrode plate had a gravimetric capacity per unit area B of 3.91 mAh/cm², and the negative electrode plate had a gravimetric capacity per unit area A of 3.98 mAh/cm².

### Example 17

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.71%, 89.14%, 0.5%, 0.05%, 1.9%, and 1.7%, respectively, were mixed to obtain a slurry.

The silicon-carbon particles were particles formed by filling the pores of porous amorphous carbon with silicon, the silicon-carbon particles had a median particle size D50 of 6.4 µm, and the mass content of the silicon element in the silicon-carbon particles was 50%.

The artificial graphite, with a median particle size Dv50 of 8.2 µm, had a secondary particle structure, and the surface thereof was coated with 1% amorphous carbon. The negative electrode plate including the artificial graphite as the active material had an OI value of 13.1 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 9.18 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.81 mm, and a capacity of 3943 mAh. Pre-cycling procedure: the battery was charged at 0.3C to 4.4 V, then charged at the constant voltage until the current was less than 0.2C, left to stand for 10 min, discharged at 0.2C to 2.65 V, left to stand for 10 min, and then charged at 0.5C to 4 V.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 18

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 2.93%, 94.58%, 0.5%, 0.05%, 1.15%, and 0.85%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.7 µm, had a secondary particle structure, and the surface thereof was coated with 1% amorphous carbon. The negative electrode plate including the artificial graphite as the active material had an OI value of 21.8 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 10.32 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.94 mm, and a capacity of 4013 mAh. Pre-cycling procedure: the battery was charged at 0.3C to 4.2 V, then charged at the constant voltage until the current was less than 0.2C, left to stand for 10 min, discharged at 0.2C to 2.65 V, left to stand for 10 min, and then charged at 0.5C to 4 V.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 19

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 15.25%, 79.5%, 0.5%, 0.05%, 0.75%, and 3.95%, respectively, were mixed to obtain a slurry.

The silicon-carbon particles were particles formed by filling the pores of porous amorphous carbon with silicon, the silicon-carbon particles had a median particle size D50 of 12.7 µm, and the mass content of the silicon element in the silicon-carbon particles was 50%.

The artificial graphite, with a median particle size Dv50 of 21.5 µm, had a secondary particle structure, and the surface thereof was coated with 1% amorphous carbon. The negative electrode plate including the artificial graphite as the active material had an OI value of 7.1 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 7.22 mg/cm² and a compacted density of 1.73 g/cm³.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.58 mm, and a capacity of 3823 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Example 20

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.76%, 89.84%, 0.5%, 0.05%, 1.2%, and 1.65%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 12.9 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 11.5 mg/cm² and a compacted density of 1.65 g/cm³.

### 2. Preparation of positive electrode plate

The procedure was essentially identical to that of Example 1, except that the areal density of the positive electrode coating was 24 mg/cm².

### 3. Assembly

The procedure was essentially identical to that of Example 1, except that after sorting, the lithium-ion battery had a voltage of 3.67 V, an initial thickness D₀ of 4.68 mm, and a capacity of 4995 mAh.

4. The battery was disassembled and the relevant parameters were measured according to the methods described in Example 1. The results are shown in Table 1. In the lithium-ion battery, the positive electrode plate had a gravimetric capacity per unit area B of 4.93 mAh/cm², and the negative electrode plate had a gravimetric capacity per unit area A of 5.03 mAh/cm².

### Example 21

The preparation of the lithium-ion battery in this example included the following steps:

### 1. Preparation of negative electrode plate precursor

Silicon-carbon particles, artificial graphite, carbon black, single-walled carbon nanotubes, sodium carboxymethyl cellulose, and styrene-butadiene rubber, in percentages by mass of 6.76%, 89.84%, 0.5%, 0.05%, 1.2%, and 1.65%, respectively, were mixed to obtain a slurry.

The silicon-carbon particles were particles formed by filling the pores of porous amorphous carbon with silicon, the silicon-carbon particles had a median particle size D50 of 9.1 µm, and the mass content of the silicon element in the silicon-carbon particles was 50%.

The artificial graphite, with a median particle size Dv50 of 13.3 µm, had a secondary particle structure, and the surface thereof was coated with 1% amorphous carbon. The negative electrode plate including the artificial graphite as the active material had an OI value of 12.9 at a compacted density of 1.73 g/cm³.

The slurry above was coated onto the surface of a copper foil current collector with a thickness of 6 µm, followed by drying, rolling, and slitting to obtain a negative electrode plate precursor with an areal density of 8.2 mg/cm² and a compacted density of 1.78 g/cm³.

### 2. Preparation of positive electrode plate

The procedure was essentially identical to that of Example 1, except that the areal density of the positive electrode coating was 17.1 mg/cm².

### 3. Assembly

The procedure was essentially identical to that of Example 1, except that after sorting, the lithium-ion battery had a voltage of 3.67 V, an initial thickness D₀ of 3.44 mm, and a capacity of 3564 mAh.

4. The battery was disassembled and the relevant parameters were measured according to the methods described in Example 1. The results are shown in Table 1. In the lithium-ion battery, the positive electrode plate had a gravimetric capacity per unit area B of 3.51 mAh/cm², and the negative electrode plate had a gravimetric capacity per unit area A of 3.58 mAh/cm².

### Comparative example 1

The preparation of the lithium-ion battery in this comparative example included the following steps:

### 1. Preparation of negative electrode plate precursor

The procedure was essentially identical to that of Example 1, except that the median particle size D50 of the artificial graphite used was 19.3 µm.

### 2. Preparation of positive electrode plate

Same as in Example 1.

### 3. Assembly

The procedure was essentially identical to that of Example 1, except that after sorting, the lithium-ion battery had a voltage of 3.67 V, an initial thickness D₀ of 3.79 mm, and a capacity of 3951 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Comparative example 2

The preparation of the lithium-ion battery in this comparative example included the following steps:

### 1. Preparation of negative electrode plate precursor

Same as in Example 1.

### 2. Preparation of positive electrode plate

Same as in Example 1.

### 3. Assembly

The procedure was essentially identical to that of Example 1, except the re-cycling procedure: the battery was charged at 0.3C to 4.38 V, then charged at the constant voltage until the current was less than 0.2C, left to stand for 10 min, discharged at 0.2C to 2.65 V, left to stand for 10 min, and then charged at 0.5C to 4 V; and after sorting, the lithium-ion battery had a voltage of 3.67 V, an initial thickness D₀ of 3.80 mm, and a capacity of 3939 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

### Comparative example 3

The preparation of the lithium-ion battery in this comparative example included the following steps:

### 1. Preparation of negative electrode plate precursor

Same as in Example 1.

### 2. Preparation of positive electrode plate

Same as in Example 1.

### 3. Assembly

The procedure was essentially identical to that of Example 1, except the re-cycling procedure: the battery was charged at 0.3C to 4.21 V, then charged at the constant voltage until the current was less than 0.2C, left to stand for 10 min, discharged at 0.2C to 2.65 V, left to stand for 10 min, and then charged at 0.5C to 4 V; and after sorting, the lithium-ion battery had a voltage of 3.67 V, an initial thickness D₀ of 3.80 mm, and a capacity of 3947 mAh.

4. The battery was disassembled and the relevant parameters were measured according to the methods described in Example 1. The results are shown in Table 1. In the lithium-ion battery, the positive electrode plate had a gravimetric capacity per unit area B of 3.91 mAh/cm², and the negative electrode plate had a gravimetric capacity per unit area A of 3.98 mAh/cm².

**Table 1**

| | | α | η | d | a*d/η | β | φ | φ*η | m | n | m*d | (1.27n-6.32m)/ η | SD1 | CD1 | SD2 | CD2 | γ/η |
|---|---|---|---|---|---|---|---|---|---|---|---|---|---|---|---|---|---|
| Examp les | 1 | 45 | 3.38% | 13.01 | 17321 | 29 | 12.1 | 0.41 | 0.180% | 2.20% | 2.34% | 49.0% | 19.02 | 3.175 | 9.12 | 1.375 | 1.80 |
| | 2 | 62 | 3.37% | 13.02 | 23954 | 32 | 12.1 | 0.41 | 0.181% | 2.21% | 2.36% | 49.3% | 19.04 | 3.178 | 9.11 | 1.368 | 1.57 |
| | 3 | 25 | 3.38% | 13.05 | 9652 | 26 | 12.0 | 0.41 | 0.183% | 2.21% | 2.39% | 48.8% | 19.01 | 3.181 | 9.13 | 1.367 | 1.89 |
| | 4 | 45 | 3.37% | 13.04 | 17412 | 30 | 12.2 | 0.41 | 0.178% | 2.20% | 2.32% | 49.5% | 21.82 | 3.811 | 9.11 | 1.354 | 1.84 |
| | 5 | 46 | 3.38% | 13.06 | 17774 | 19 | 12.1 | 0.41 | 0.181% | 2.22% | 2.36% | 49.6% | 18.63 | 3.182 | 9.10 | 1.378 | 1.77 |
| | 6 | 45 | 3.39% | 13.01 | 17270 | 54 | 12.2 | 0.41 | 0.180% | 2.20% | 2.34% | 48.9% | 18.98 | 3.175 | 9.14 | 1.358 | 1.36 |
| | 7 | 46 | 3.37% | 12.99 | 17731 | 30 | 7.8 | 0.26 | 0.179% | 2.21% | 2.33% | 49.8% | 18.97 | 3.176 | 9.08 | 1.386 | 1.81 |
| | 8 | 44 | 3.38% | 12.98 | 16897 | 29 | 17.1 | 0.58 | 0.181% | 2.19% | 2.35% | 48.4% | 18.99 | 3.178 | 9.07 | 1.354 | 1.83 |
| | 9 | 45 | 3.38% | 13.03 | 17348 | 30 | 6.2 | 0.21 | 0.182% | 2.20% | 2.37% | 48.6% | 19.01 | 3.179 | 9.08 | 1.401 | 1.80 |
| | 10 | 45 | 3.39% | 13.05 | 17323 | 31 | 19.4 | 0.66 | 0.178% | 2.21% | 2.32% | 49.6% | 19.03 | 3.176 | 9.09 | 1.347 | 1.80 |
| | 11 | 45 | 3.36% | 12.96 | 17357 | 31 | 12.2 | 0.41 | 0.322% | 2.89% | 4.17% | 48.7% | 19.00 | 3.177 | 9.19 | 1.377 | 1.85 |
| | 12 | 44 | 3.40% | 12.98 | 16798 | 29 | 12.3 | 0.42 | 0.055% | 1.58% | 0.71% | 48.8% | 18.96 | 3.177 | 9.02 | 1.356 | 1.76 |
| | 13 | 46 | 3.33% | 13.04 | 18013 | 30 | 12.2 | 0.41 | 0.179% | 3.43% | 2.33% | 96.9% | 19.04 | 3.176 | 9.25 | 1.378 | 1.83 |
| | 14 | 45 | 3.40% | 13.01 | 17219 | 30 | 12.1 | 0.41 | 0.180% | 1.67% | 2.34% | 28.9% | 19.02 | 3.176 | 9.03 | 1.344 | 1.76 |
| | 15 | 45 | 3.37% | 13.04 | 17412 | 29 | 12.0 | 0.40 | 0.182% | 2.19% | 2.37% | 48.4% | 19.01 | 3.178 | 9.11 | 1.374 | 0.06 |
| | 16 | 46 | 3.38% | 13.06 | 17774 | 30 | 12.1 | 0.41 | 0.181% | 2.18% | 2.36% | 48.0% | 19.03 | 3.178 | 9.12 | 1.376 | 3.96 |
| | 17 | 78 | 3.35% | 8.05 | 18743 | 36 | 12.2 | 0.41 | 0.286% | 2.75% | 2.30% | 50.2% | 18.99 | 3.178 | 9.17 | 1.370 | 1.82 |
| | 18 | 18 | 1.46% | 13.33 | 16434 | 9 | 20.5 | 0.30 | 0.172% | 1.51% | 2.29% | 56.8% | 19.02 | 3.178 | 10.32 | 1.420 | 1.98 |
| | 19 | 45 | 7.63% | 20.89 | 12320 | 29 | 6.3 | 0.48 | 0.115% | 3.68% | 2.40% | 51.7% | 19.04 | 3.178 | 7.23 | 1.254 | 1.80 |
| | 20 | 47 | 3.40% | 13.10 | 18109 | 28 | 12.4 | 0.42 | 0.183% | 2.24% | 2.40% | 49.7% | 24.04 | 3.175 | 11.52 | 1.317 | 1.83 |
| | 21 | 45 | 3.38% | 13.01 | 17321 | 29 | 12.1 | 0.41 | 0.180% | 2.20% | 2.34% | 49.0% | 17.13 | 3.174 | 8.22 | 1.422 | 1.80 |
| Compa rative exampl es | 1 | 47 | 3.38% | 17.94 | 24946 | 29 | 11.8 | 0.40 | 0.180% | 2.21% | 3.23% | 49.4% | 19.01 | 3.179 | 9.11 | 1.371 | 1.72 |
| | 2 | 69 | 3.39% | 12.98 | 26419 | 34 | 12.1 | 0.41 | 0.181% | 2.20% | 2.35% | 48.7% | 19.98 | 3.177 | 9.12 | 1.368 | 1.80 |
| | 3 | 21 | 3.38% | 12.96 | 8052 | 12 | 12.1 | 0.41 | 0.181% | 2.19% | 2.35% | 48.4% | 19.01 | 3.176 | 9.13 | 1.370 | 1.75 |

### Test example

### 1. Cycling performance

For Examples 1-3, Examples 6-21, and Comparative examples 1-3, where the positive electrode active material was the NCM811 material, the following test steps were used: at 45°C, the battery was charged at a constant current of 1.2C to 4.1 V, charged at 0.7C to 4.25 V, then charged at the constant voltage to 0.05C, left to stand for 10 min, discharged at 0.5C to 2.65 V, and left to stand for 10 min; and following the charging and discharging steps, the battery was subjected to a cycling test for 800 cycles to determine the discharge capacity Q₁ at the first cycle, the discharge capacity Q₈₀₀ at the 800th cycle, and the fully-charged thickness every 100 cycles, with the fully-charged thickness at the 800th cycle being D₈₀₀.

For Example 4, where the positive electrode active material was a lithium cobalt oxide, the following test steps were used: at 45°C, the battery was charged at a constant current of 1.2C to 4.3 V, charged at 0.7C to 4.45 V, then charged at the constant voltage to 0.05C, left to stand for 10 min, discharged at 0.5C to 3 V, and left to stand for 10 min; and following the charging and discharging steps, the battery was cycled 800 times to determine the discharge capacity Q₁ at the first cycle, the discharge capacity Q₈₀₀ at the 800th cycle, and the fully-charged thickness every 100 cycles, with the fully-charged thickness at the 800th cycle being D₈₀₀.

For Example 5, where the positive electrode active material was a Ni90 material, the following test steps were used: at 45°C, the battery was charged at a constant current of 1.2C to 4.05 V, charged at 0.7C to 4.2 V, then charged at the constant voltage to 0.05C, left to stand for 10 min, discharged at 0.5C to 2.6 V, and left to stand for 10 min; and following the charging and discharging steps, the battery was cycled 800 times to determine the discharge capacity Q₁ at the first cycle, the discharge capacity Q₈₀₀ at the 800th cycle, and the fully-charged thickness every 100 cycles, with the fully-charged thickness at the 800th cycle being D₈₀₀.

The capacity retention rate and the thickness change rate H after 800 cycles were calculated according to the following equations. The results are shown in Table 2.$Capacity retention rate Q = {Q}_{800} / {Q}_{1} * 100 %$$Thickness change rate H \left(%\right) = \left({D}_{800}-{D}_{0}\right) / {D}_{0} * 100 %$

### 2. Rate performance

For Examples 1-3, Examples 6-21, and Comparative examples 1-3, the batteries were subjected to a charge-discharge test at 25°C using a charge-discharge tester. The charge-discharge procedures were as follows: the batteries were charged at a constant current of 0.2C to 4.25 V, then charged at the constant voltage of 4.25 V until the current dropped to 0.02C, left to stand for 5 min, and then discharged at a constant current of 0.2C to 2.65 V to record the discharge capacity Q_{0.2c}; and after leaving to stand for 5 min, the batteries were charged at a constant current of 0.2C to 4.25 V, then charged at the constant voltage of 4.25 V until the current dropped to 0.02C, left to stand for 5 min, and then discharged at a constant current of 2C to 2.65 V to record the discharge capacity Q_{2c}.

For Example 4, the battery was subjected to a charge-discharge test at 25°C using a charge-discharge tester. The charge-discharge procedures were as follows: the battery was charged at a constant current of 0.2C to 4.45 V, then charged at the constant voltage of 4.45 V until the current dropped to 0.02C, left to stand for 5 min, and then discharged at a constant current of 0.2C to 3 V to record the discharge capacity Q_{0.2c}; and after leaving to stand for 5 min, the battery was charged at a constant current of 0.2C to 4.45 V, then charged at the constant voltage of 4.45 V until the current dropped to 0.02C, left to stand for 5 min, and then discharged at a constant current of 2C to 3 V to record the discharge capacity Q_{2c}.

For Example 5, the battery was subjected to a charge-discharge test at 25°C using a charge-discharge tester. The charge-discharge procedures were as follows: the battery was charged at a constant current of 0.2C to 4.2 V, then charged at the constant voltage of 4.2 V until the current dropped to 0.02C, left to stand for 5 min, and then discharged at a constant current of 0.2C to 2.6 V to record the discharge capacity Q_{0.2c}; and after leaving to stand for 5 min, the battery was charged at a constant current of 0.2C to 4.2 V, then charged at the constant voltage of 4.2 V until the current dropped to 0.02C, left to stand for 5 min, and then discharged at a constant current of 2C to 2.6 V to record the discharge capacity Q_{2c}.

The capacity retention rate R at a discharge rate of 2C was calculated according to the equation below:
$Capacity retention rate R at 2 C discharge = {Q}_{2 c} / {Q}_{0.2 c} \times 100 %$

The results are shown in Table 2.

### 3. Energy density

At 25°C, using a battery charge-discharge tester, the lithium-ion battery was charged at a constant current of 0.5C to 4.25 V, then charged at the constant voltage until the current dropped to 0.02C, left to stand for 5 min, and then discharged at a constant current of 0.5C to 2.8 V; the initial discharge capacity Q_{discharge} and the initial discharge energy E_{discharge} of the battery were recorded; the thickness, width and length of the battery were measured to calculate their product, so as to obtain the volume X of the battery; and the volumetric energy density of the battery was calculated as ED = E_{discharge}/X, in Wh/L.

The results are shown in Table 2.

**Table 2**

| | Q | H | R | ED |
|---|---|---|---|---|
| Example 1 | 86.2% | 8.9% | 91.6% | 751 |
| Example 2 | 85.3% | 9.3% | 91.0% | 749 |
| Example 3 | 85.2% | 9.4% | 91.7% | 749 |
| Example 4 | 86.0% | 9.1% | 91.5% | 759 |
| Example 5 | 86.1% | 9.0% | 91.5% | 753 |
| Example 6 | 83.1% | 10.4% | 88.2% | 747 |
| Example 7 | 84.7% | 10.9% | 90.1% | 750 |
| Example 8 | 84.3% | 11.5% | 91.8% | 746 |
| Example 9 | 82.1% | 11.8% | 89.5% | 749 |
| Example 10 | 81.9% | 12.3% | 91.9% | 745 |
| Example 11 | 83.5% | 10.7% | 90.9% | 745 |
| Example 12 | 83.0% | 11.0% | 91.5% | 749 |
| Example 13 | 83.1% | 11.4% | 90.6% | 747 |
| Example 14 | 82.3% | 11.8% | 91.4% | 746 |
| Example 15 | 80.9% | 12.4% | 91.5% | 748 |
| Example 16 | 80.7% | 12.9% | 91.6% | 750 |
| Example 17 | 84.4% | 10.2% | 90.5% | 744 |
| Example 18 | 84.2% | 10.1% | 91.1% | 735 |
| Example 19 | 82.7% | 11.3% | 91.3% | 758 |
| Example 20 | 85.9% | 9.3% | 90.4% | 767 |
| Example 21 | 86.0% | 9.2% | 91.6% | 745 |
| Comparative example 1 | 77.2% | 14.8% | 87.6% | 749 |
| Comparative example 2 | 76.3% | 15.5% | 86.7% | 746 |
| Comparative example 3 | 77.0% | 15.3% | 88.0% | 748 |

As can be seen from Table 2, the silicon-containing negative electrode plate of the present invention exhibits excellent safety performance, cycling performance, and rate performance.

It should be finally noted that the foregoing embodiments are merely used for illustrating rather than limiting the technical solutions of the invention. Although the invention has been illustrated in detail with reference to the foregoing embodiments, it should be understood by those of ordinary skill in the art that the technical solutions described in the foregoing embodiments may still be modified, or some or all of the technical features thereof may be equivalently substituted; and these modifications or substitutions do not make the essence of the corresponding technical solution depart from the scope of the technical solutions of the embodiments of the invention.

## Claims

1. A lithium-ion battery, **characterized in that** the lithium-ion battery comprises a negative electrode plate and a positive electrode plate, wherein the positive electrode plate comprises a nickel-based positive electrode active material; a negative electrode active layer of the negative electrode plate comprises a negative electrode active material and nickel element, and the negative electrode active material comprises a silicon-carbon material and graphite;
and the components of the negative electrode active layer satisfy 9500 ≤ α*d/η ≤ 24500, wherein α, in ppm, is the content of the nickel element in the negative electrode active layer; η, in %, is the percentage by mass of the silicon element in the negative electrode active layer; and d, in µm, is the median particle size of the negative electrode active material.

2. The lithium-ion battery according to claim 1, **characterized in that** 20 ppm ≤ α ≤ 75 ppm; and/or 1.5% ≤ η ≤ 7.5%; and/or 9 µm ≤ d ≤ 16 µm.

3. The lithium-ion battery according to claim 1 or 2, **characterized in that** the negative electrode active layer further comprises cobalt element, and the content of the cobalt element in the negative electrode active layer is not higher than 50 ppm.

4. The lithium-ion battery according to any one of claims 1 to 3, **characterized in that** in an X-ray diffraction spectrum, the active layer of the negative electrode plate exhibits a first diffraction peak with 2θ being 53.7°-55.7°, and a second diffraction peak with 2θ being 76.4°-78.4°, and the intensity ratio φ of the first diffraction peak to the second diffraction peak is 8-16.

5. The lithium-ion battery according to claim 4, **characterized in that** the negative electrode plate satisfies: 0.25 ≤ φ*η ≤ 0.6.

6. The lithium-ion battery according to any one of claims 1 to 5, **characterized in that** in thermogravimetric analysis, the negative electrode active layer satisfies the following formulas 1 and 2, $0.75 % \leq m * d \leq 4 %$ formula 1, $30 % \leq \left(1.27n-6.32m\right) / η \leq 95 %$ formula 2
wherein when the negative electrode active layer is heated from 25°C to 1000°C at 10°C/min under an argon atmosphere, m is a weight loss percentage in a range of 230-360°C, and n is a weight loss percentage in a range of 230-950°C; and
preferably, 0.05% ≤ m ≤ 0.35%, and 1.5% ≤ n ≤ 3.5%.

7. The lithium-ion battery according to any one of claims 1 to 6, **characterized in that** the silicon-carbon material has a median particle size Dv50 of 6 µm-12 µm; and/or
the percentage by mass of the silicon element in the silicon-carbon material is 40%-60%; and/or
the graphite has a median particle size Dv50 of 8 µm-20 µm; and/or
the negative electrode plate has an areal density of 8 mg/cm²-15 mg/cm²; and/or
the negative electrode plate has a compacted density of 1.2 g/cm³-1.8 g/cm³.

8. The lithium-ion battery according to any one of claims 1 to 7, **characterized in that** the nickel-based positive electrode active material comprises a lithium nickel oxide, a lithium nickel manganese oxide, and LiₓNi_{y1}Co_{y2}M1_{y3}M2_{y4}O₂, wherein 0.99 ≤ x ≤ 1.05, 0.99 < y1+y2+y3 ≤ 1.05, 1/3 ≤ y1 ≤ 0.8, 0 ≤ y4 ≤ 0.1, M1 is selected from Mn or Al, and M2 is at least one of Mg, Ti, Mn, Al, Te, W, Ni, Nb, Zr, La, F, Ce, Sr, Y, K, B and P elements and is different from M1.

9. The lithium-ion battery according to any one of claims 1 to 8, **characterized in that** the positive electrode plate has an areal density of 16.7 mg/cm²-26.2 mg/cm²; and/or
the positive electrode plate has a compacted density of 3.1 g/cm³-4.2 g/cm³.

10. The lithium-ion battery according to any one of claims 1 to 9, **characterized in that** a ratio of the gravimetric capacity per unit area of the negative electrode plate to that of the positive electrode plate is 0.97-1.1;
preferably, the ratio of the gravimetric capacity per unit area of the negative electrode plate to that of the positive electrode plate is 0.99-1.05; and
preferably, the gravimetric capacity per unit area of the negative electrode plate is 3.5 mAh/cm²-5.73 mAh/cm², and the gravimetric capacity per unit area of the positive electrode plate is 3.43 mAh/cm²-5.61 mAh/cm².

11. The lithium-ion battery according to any one of claims 1 to 10, **characterized in that** an electrolyte of the lithium-ion battery comprises a fluoroethylene carbonate with a percentage by mass of γ, and 0.3 ≤ γ/η ≤ 3.6.

12. The lithium-ion battery according to any one of claims 1 to 11, **characterized in that** the graphite is selected from natural graphite, artificial graphite, or a coated natural graphite and/or artificial graphite;
and/or the negative electrode active layer further comprises a negative electrode conductive agent and a negative electrode binder, wherein the negative electrode conductive agent is selected from at least one of carbon black, acetylene black, single-walled carbon nanotubes, multi-walled carbon nanotubes, graphene, Ketjen black, and carbon fibres; and the negative electrode binder comprises at least one of polytetrafluoroethylene, polyvinylidene fluoride, polyvinyl fluoride, polyethylene, polypropylene, polyacrylic acid, sodium polyacrylate, lithium polyacrylate, polyvinyl alcohol, carboxymethyl cellulose, sodium carboxymethyl cellulose, lithium carboxymethyl cellulose, hydroxypropyl cellulose, diacetyl cellulose, polyvinyl chloride, carboxylated polyvinyl chloride, ethylene oxide-containing polymers, polyvinylpyrrolidone, polyurethane and styrene-butadiene rubber.

13. The lithium-ion battery according to claim 12, **characterized in that** the graphite is selected from an amorphous carbon-coated artificial graphite product, a coating mass of the amorphous carbon being 0.1%-3% of the product.

14. The lithium-ion battery according to any one of claims 1 to 13, **characterized in that** the positive electrode plate comprises a positive electrode current collector, and a positive electrode active layer comprises a positive electrode active material provided on one or both surfaces of the positive electrode current collector; the positive electrode active material comprises the nickel-based positive electrode active material, a positive electrode conductive agent, and a positive electrode binder; and the positive electrode active layer comprises, in percentage by mass, 70 wt%-99 wt% of the positive electrode active material, 0.5 wt%-15 wt% of the positive electrode conductive agent, and 0.5 wt%-15 wt% of the positive electrode binder.

15. The lithium-ion battery according to claim 14, **characterized in that** the positive electrode conductive agent is selected from at least one of carbon black, acetylene black, graphene, single-walled carbon nanotubes, multi-walled carbon nanotubes, Ketjen black, and carbon fibres;
and/or the positive electrode binder is selected from at least one of polytetrafluoroethylene, polyvinylidene fluoride, polyvinyl fluoride, polyethylene, polypropylene, polyvinyl alcohol, carboxymethyl cellulose, hydroxypropyl cellulose, diacetyl cellulose, polyvinyl chloride, carboxylated polyvinyl chloride, ethylene oxide-containing polymers, polyvinylpyrrolidone, and polyurethane.
